(19) **Europäisches Patentamt / European Patent Office / Office européen des brevets**

(11) **EP 4 622 266 A1**

(12) **EUROPEAN PATENT APPLICATION**
published in accordance with Art. 153(4) EPC

(43) Date of publication:
**24.09.2025  Bulletin 2025/39**

(21) Application number: **23892084.7**

(22) Date of filing: **17.11.2023**

(51) International Patent Classification (IPC):
**H04N 19/593** (2014.01)  **H04N 19/11** (2014.01)
**H04N 19/176** (2014.01)  **H04N 19/70** (2014.01)
**H04N 19/132** (2014.01)

(52) Cooperative Patent Classification (CPC):
**H04N 19/11; H04N 19/132; H04N 19/176;**
**H04N 19/593; H04N 19/70**

(86) International application number:
**PCT/KR2023/018594**

(87) International publication number:
**WO 2024/107022 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022  KR 20220155771**

(71) Applicant: **LG Electronics Inc.**
**Yeongdeungpo-gu**
**Seoul 07336 (KR)**

(72) Inventors:
• **YOO, Sunmi**
  **Seoul 06772 (KR)**
• **NAM, Junghak**
  **Seoul 06772 (KR)**
• **CHOI, Jangwon**
  **Seoul 06772 (KR)**
• **HONG, Myungoh**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **IMAGE ENCODING/DECODING METHOD AND DEVICE, AND RECORDING MEDIUM ONTO WHICH BITSTREAM IS STORED**

(57)  An image encoding/decoding method and device, according to the present disclosure, can derive an intra prediction mode of the current block, derive a first prediction sample of the current block on the basis of the intra prediction mode, derive a second prediction sample of the current block on the basis of a predetermined planar mode, and derive a prediction sample of the current block on the basis of a weighted sum between the first prediction sample and the second prediction sample.

FIG.4

## Description

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide an intra prediction method and device based on DIMD.

The present disclosure is to provide a method and a device for modifying a prediction sample based on DIMD.

[Technical Solution]

An image decoding method and device according to the present disclosure may derive an intra prediction mode of a current block, derive a first prediction sample of a current block based on the intra prediction mode, derive a second prediction sample of a current block based on a predetermined planar mode and derive a prediction sample of the current block based on a weighted sum between the first prediction sample and the second prediction sample.

In an image decoding method and device according to the present disclosure, the intra prediction mode may include a first decoder-side intra mode derivation (DIMD) mode derived by DIMD. Here, DIMD may be a method for deriving one or more intra prediction modes based on a gradient between samples belonging to a neighboring area of the current block.

In an image decoding method and device according to the present disclosure, the predetermined planar mode may be any one of a non-directional planar mode, a horizontal planar mode or a vertical planar mode.

In an image decoding method and device according to the present disclosure, the neighboring area may include a plurality of sub-areas, and the plurality of sub-areas may include at least two of a left neighboring area, a top neighboring area or a top-left neighboring area.

In an image decoding method and device according to the present disclosure, the amplitude of a gradient for the intra prediction mode may be calculated for each of the plurality of sub-areas.

In an image decoding method and device according to the present disclosure, the predetermined planar mode may be determined based on the position of a sub-area to which the amplitude of the largest gradient among the amplitudes of gradients for the plurality of sub-areas belongs.

In an image decoding method and device according to the present disclosure, the predetermined planar mode may be determined based on a comparison between any one of the amplitudes of gradients for the plurality of sub-areas and another one of the amplitudes of gradients for the plurality of sub-areas.

In an image decoding method and device according to the present disclosure, the predetermined planar mode may be determined based on a comparison between the amplitude of a gradient for the DIMD mode and the amplitude of a gradient for a second DIMD mode derived based on the DIMD.

In an image decoding method and device according to the present disclosure, a predetermined planar mode may be determined based on the directionality of the first DIMD mode.

In an image decoding method and device according to the present disclosure, the predetermined planar mode may be determined based on a difference between the first DIMD mode and a second DIMD mode derived based on the DIMD.

In an image decoding method and device according to the present disclosure, pre-defined intra prediction modes may be divided into a plurality of groups, and the directionality of the first DIMD mode may be determined based on a group to which the first DIMD mode among the plurality of groups belongs.

An image encoding method and device according to the present disclosure may derive an intra prediction mode of a current block, derive a first prediction sample of a current block based on the intra prediction mode, derive a second prediction sample of a current block based on a predetermined planar mode and derive a prediction sample of the current block based on a weighted sum between the first prediction sample and the second prediction sample.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to an image encoding method according to the present disclosure are provided.

[Advantageous Effects]

According to the present disclosure, the accuracy of intra prediction may be improved by modifying a DIMD-based prediction sample based on a predetermined planar mode.

According to the present disclosure, the efficiency of intra prediction may be improved by defining the type of a plurality of planar modes and adaptively using it.

According to the present disclosure, the accuracy of intra prediction may be improved by adaptively determining the type of a planar mode by considering the directionality of a DIMD-based intra prediction mode.

According to the present disclosure, the efficiency of intra prediction may be improved by modifying a DIMD-based prediction sample under a certain condition.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 is an embodiment according to the present disclosure, and shows an intra prediction method performed by a decoding device.

FIG. 5 shows a schematic configuration of an intra predictor 331 performing an intra prediction method according to the present disclosure.

FIG. 6 is an embodiment according to the present disclosure, and shows an intra prediction method performed by an encoding device.

FIG. 7 shows a schematic configuration of an intra predictor 222 performing an intra prediction method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

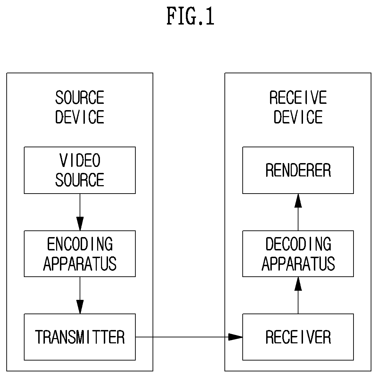

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

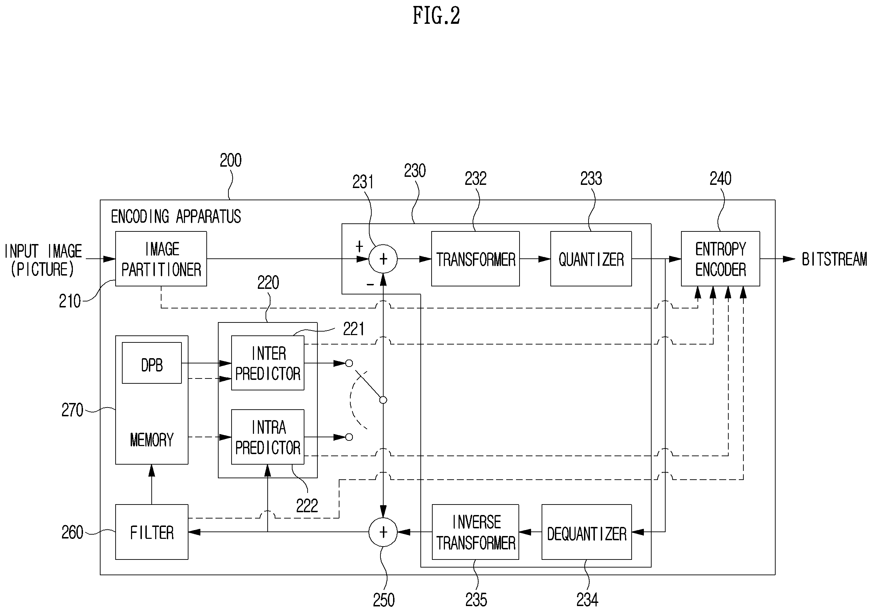

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode or a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

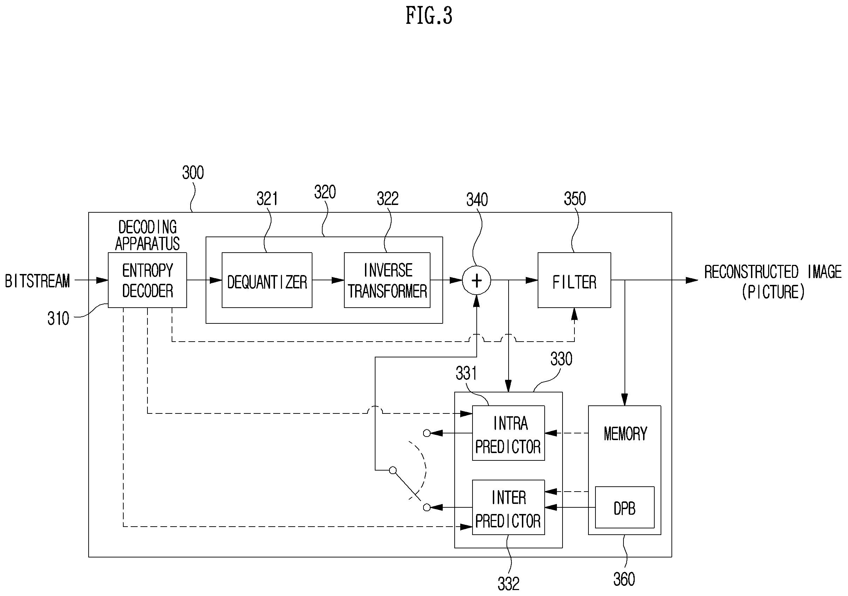

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the large coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may reorder quantized transform coefficients into a two-dimensional block form. In this case, the reordering may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

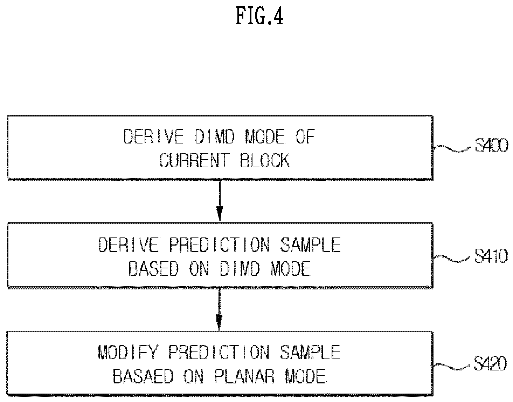

FIG. 4 is an embodiment according to the present disclosure, and shows an intra prediction method performed by a decoding device.

Referring to FIG. 4, the intra prediction mode of a current block may be derived based on decoder-side intra mode derivation (DIMD) S400.

A gradient may be derived based on at least two samples belonging to a neighboring area of a current block. Here, a gradient may include at least one of a horizontal gradient or a vertical gradient. N intra prediction modes may be derived based on at least one of the derived gradient or an amplitude of the gradient. Here, the amplitude of a gradient may be determined based on a sum of the horizontal gradient and the vertical gradient.

As an example, a gradient may be calculated in units of a window having a predetermined size. An angle indicating a directionality of a sample within the window may be calculated based on the calculated gradient. The calculated angle may correspond to any one of the above-described pre-defined intra prediction modes. The amplitude of the gradient may be stored/updated for the intra prediction mode corresponding to the calculated angle. Through this process, for each window, an intra prediction mode corresponding to the calculated gradient may be determined, and the amplitude of the gradient may be stored/updated for the determined intra prediction mode. Among the stored/updated amplitudes of gradients, the top T intra prediction modes having the largest amplitude may be selected. Here, N may be an integer of 1, 2, 3, or more. The selected intra prediction mode may be set as the intra prediction mode of a current block.

The neighboring area used to calculate the slope may include at least one of a left area, an upper area, an upper left area, a lower left area, or an upper right area adjacent to the current block, which are previously reconstructed areas of the current block. The neighboring area may include at least one of a neighboring sample line adjacent to the current block, a first non-neighboring sample line that is 1-sample away from the current block, or a second non-neighboring sample line that is 2-sample away from the current block. However, it is not limited thereto, and a non-neighbor sample line that is M-sample away from a current block may be further included, and M may be an integer greater than or equal to 3.

The neighboring area may be an area that is identically pre-defined in the encoding apparatus and the decoding apparatus to calculate the slope. Alternatively, the neighboring area may be variably determined based on information specifying the position of the neighboring area. In this case, the information specifying the position of the neighboring area may be signaled through a bitstream. Alternatively, the position of the neighboring area may be determined based on at least one of whether the current block is located at a boundary of a coding tree unit, a size of the current block (e.g., width, height, a ratio of width and height, a product of width and height), a partitioning type of the current block, a prediction mode of the neighboring area, or the availability of the neighboring area.

As an example, based on the current block being located at the upper boundary of the coding tree unit, at least one of the upper region, the upper left region, or the upper right region of the current block may not be referenced to calculate the gradient. When the width of the current block is greater than the height, either the upper region or the left region (e.g., the upper region) may be referenced to calculate the gradient, and the other (e.g., the left region) may not be referenced to calculate the gradient. Conversely, based on the width of the current block being less than the height, either the upper region or the left region (e.g., the left region) may be referenced to calculate the gradient, and the other (e.g., the upper region) may not be referenced to calculate the gradient. Based on the current block being generated through block partitioning in the horizontal direction, the upper region may not be referenced to calculate the gradient. Conversely, based on the current block being generated through block partitioning in the vertical direction, the left region may not be referenced to calculate the gradient. Based on the neighboring area of the current block being encoded in inter mode, the neighboring area may not be referenced to calculate the gradient. However, it is not limited thereto, and the neighboring area may be referenced to calculate the gradient regardless of the prediction mode of the neighboring area.

Referring to FIG. 4, the prediction sample of a current block may be derived based on the intra prediction mode of a current block S410.

Through the above-described method, one or more intra prediction modes may be derived based on DIMD for a current block. Hereinafter, an intra prediction mode derived based on DIMD is referred to as a DIMD mode.

When one DIMD mode is used for a current block, intra prediction may be performed based on a corresponding DIMD mode to derive the prediction sample of a current block.

When a plurality of DIMD modes are used for a current block, a prediction sample may be derived for each of a plurality of DIMD modes, and the prediction sample of a current block may be derived based on a weighted sum between derived prediction samples. As an example, when N DIMD modes are used, the prediction sample of a current block may be derived as in Equation 1 below.

[Equation 1]

$$pred = w_1 * pred_1 + w_2 * pred_2 + \cdots + w_N * pred_N$$

In Equation 1, pred may mean the prediction sample of a current block. $pred_1$ may mean a prediction sample derived based on the first DIMD mode, $pred_2$ may mean a prediction sample derived based on the second DIMD mode, and $pred_N$ may mean a prediction sample derived based on the N-th DIMD mode. Here, the first DIMD mode may mean the first DIMD mode in descending order of the amplitude of a gradient among the top N DIMD modes with the largest amplitude of a gradient. Similarly, the second DIMD mode may mean the second DIMD mode in descending order of the amplitude of a gradient among the top N DIMD modes with the largest amplitude of a gradient, and the N-th DIMD mode may mean the N-th DIMD mode in descending order of the amplitude of a gradient among the top N DIMD modes with the largest amplitude of a gradient. $w_1$ to $w_N$ are a weight applied to $pred_1$ to $pred_N$, respectively, and may be determined based on the amplitude of a gradient for N DIMD modes.

Referring to FIG. 4, the prediction sample of a current block may be modified based on a predetermined planar mode S420.

A prediction sample derived based on one or more DIMD modes described above may be modified based on a prediction sample according to a predetermined planar mode, and a modified prediction sample may be set as the prediction sample of a current block.

Specifically, the prediction sample of a current block may be derived based on a weighted sum between a prediction sample derived based on one or more DIMD modes described above and a prediction sample derived based on a predetermined planar mode. Here, a predetermined planar mode may be any one of a non-directional planar mode, a horizontal planar mode or a vertical planar mode.

A prediction sample according to the non-directional planar mode may be derived as a weighted sum of a prediction sample interpolated in a horizontal direction and a prediction sample interpolated in a vertical direction. Here, a prediction sample interpolated in a horizontal direction may be derived based on the left neighboring sample and the top-right neighboring sample of a current block. A prediction sample interpolated in a vertical direction may be derived based on the top neighboring sample and the bottom-left neighboring sample of a current block. As an example, a prediction sample according to a non-directional planar mode may be derived as in Equation 2 below.

[Equation 2]

$$predV(x, y) = \big((H - 1 - y) * rec(x, -1) + (y + 1) * rec(-1, H)\big) \ll log_2 W$$

$$predH(x, y) = \big((W - 1 - x) * rec(-1, y) + (x + 1) * rec(W, -1)\big) \ll log_2 H$$

$$Planar(x, y) = (predV(x, y) + predH(x, y) + W * H) \gg (log_2 W + log_2 H + 1)$$

In Equation 2, predH and predV may mean a prediction sample interpolated in a horizontal direction and a prediction sample interpolated in a vertical direction, respectively. W and H may mean the width and height of a current block, respectively. rec(x,-1) may mean the top neighboring sample of a current block, and rec(-1,H) may mean the bottom-left neighboring sample of a current block. rec(-1,y) may mean the left neighboring sample of a current block, and rec(W,-1) may mean the top-right neighboring sample of a current block. Planar may mean a prediction sample according to a non-directional planar mode.

A prediction sample according to the horizontal planar mode may be derived based on a prediction sample interpolated in a horizontal direction. Here, a prediction sample interpolated in a horizontal direction may be derived based on a weighted sum of the left neighboring sample and the top-right neighboring sample of a current block. As an example, a prediction sample according to a horizontal planar mode may be derived as in Equation 3 or Equation 4 below.

[Equation 3]

$$predH(x,y) = \big((W - 1 - x) * rec(-1,y) + (x + 1) * rec(W,-1)\big) \ll log_2 H$$

$$Planar_{Hor}(x,y) = \Big(\big(predH + ((W * H) \gg 1)\big)\Big) \gg (log_2 W + log_2 H)$$

[Equation 4]

$$Planar_{Hor}(x,y) = \big((W - 1 - x) * rec(-1,y) + (x + 1) * rec(W,-1) + (W \gg 1)\big) \gg log_2 W$$

In Equation 3, predH may mean a prediction sample interpolated in a horizontal direction. W and H may mean the width and height of a current block, respectively. rec(-1,y) may mean the left neighboring sample of a current block, and rec(W,-1) may mean the top-right neighboring sample of a current block. Planar$_{Hor}$ may mean a final prediction sample according to a horizontal planar mode. It may also be applied equally to Equation 4.

A prediction sample according to the vertical planar mode may be derived based on a prediction sample interpolated in a vertical direction. Here, a prediction sample interpolated in a vertical direction may be derived based on a weighted sum of the top neighboring sample and the bottom-left neighboring sample of a current block. As an example, a prediction sample according to a vertical planar mode may be derived as in Equation 5 or Equation 6 below.

[Equation 5]

$$predV(x,y) = \big((H - 1 - y) * rec(x,-1) + (y + 1) * rec(-1,H)\big) \ll log_2 W$$

$$Planar_{Ver}(x,y) = \Big(\big(predV\big) + ((W * H) \gg 1)\Big) \gg (log_2 W + log_2 H)$$

[Equation 6]

$$Planar_{Ver}(x,y) = \big((H - 1 - y) * rec(x,-1) + (y + 1) * rec(-1,H) + (H \gg 1)\big) \gg log_2 H$$

In Equation 5, predV may mean a prediction sample interpolated in a vertical direction. W and H may mean the width and height of a current block, respectively. rec(x,-1) may mean the top neighboring sample of a current block, and rec(-1,H) may mean the bottom-left neighboring sample of a current block. Planar$_{Ver}$ may mean a final prediction sample according to a vertical planar mode. It may also be applied equally to Equation 6.

The modification based on the predetermined planar mode may be adaptively performed based on whether the neighboring area of a current block is available. As an example, when both the left neighboring area and the top neighboring area of a current block are available, the weighted sum of prediction samples according to a predetermined planar mode may be performed. On the other hand, when at least one of the left neighboring area or the top neighboring area of a current block is not available, the weighted sum of prediction samples according to a predetermined planar mode may not be performed. In this case, the prediction sample of a current block may be derived based on a prediction sample according to a DIMD mode without a prediction sample according to a predetermined planar mode. This method may improve the efficiency of prediction by giving a weight to the sample of a neighboring area with a high contribution to prediction of a current block.

Alternatively, the modification based on the predetermined planar mode may be adaptively performed based on a predetermined flag. Here, a flag may indicate whether to modify a prediction sample according to a DIMD mode.

Alternatively, a flag may indicate whether to modify the pre-derived prediction sample of a current block by using a prediction sample according to a predetermined planar mode. Alternatively, a flag may indicate whether the weighted sum of a DIMD mode and a predetermined planar mode is applied. The flag may be signaled through a bitstream, and may be derived based on the encoding parameter of a current block. Here, an encoding parameter may include at least one of the size of a current block, whether an intra prediction mode is a directional mode, the angle of an intra prediction mode, whether to apply a DIMD mode or a component type.

Hereinafter, a method for determining the type of a planar mode for a weighted sum with a prediction sample based on a DIMD mode will be described.

Embodiment 1

A predetermined planar mode may be determined based on the amplitude of a gradient in a predetermined neighboring area for the first DIMD mode of a current block.

Specifically, a neighboring area adjacent to a current block may be divided into a plurality of sub-areas, and the amplitude of a gradient for the first DIMD mode of a current block may be calculated/confirmed in each sub-area.

The neighboring area may be divided into a left neighboring area and a top neighboring area. Alternatively, the neighboring area may be divided into a left neighboring area, a top neighboring area and a top-left neighboring area. Alternatively, the neighboring area may be divided into at least two of a left neighboring area, a top neighboring area, a top-left neighboring area, a bottom-left neighboring area or a top-right neighboring area.

According to the size of a current block or the ratio of the width and height of a current block, a top-left neighboring area may be included in a top or left neighboring area. Alternatively, according to the size of a current block or the ratio of the width and height of a current block, a top-left neighboring area may be excluded from the plurality of sub-areas. As an example, when the size of a current block is greater than 8x8 and the width of a current block is greater than a height, a top-left neighboring area may be included in a left neighboring area. When the size of a current block is greater than 8x8 and the width of a current block is less than a height, a top-left neighboring area may be included in a top neighboring area.

When the amplitude of a gradient in a left neighboring area is greater than the amplitude of a gradient in a top neighboring area, a current block may be determined as a block that is greatly influenced by the sample of a left neighboring area. In this way, when a current block is determined as a block that is greatly influenced by the sample of a left neighboring area, the predetermined planar mode may be determined as a horizontal planar mode. In other words, the prediction sample of a current block may be derived based on a weighted sum between a prediction sample derived based on a DIMD mode and a prediction sample derived based on a horizontal planar mode.

As an example, when N DIMD modes are derived for a current block, the prediction sample of a current block may be derived as in Equation 7 below.

$$[\text{Equation } 7]$$

$$pred = w_1 * pred_1 + w_2 * pred_2 + \cdots + w_{N-1} * pred_{(N-1)} + w_N * pred_N + w_{(N+1)} * Planar_{Hor}$$

In Equation 7, pred may mean the prediction sample of a current block. $pred_1$ to $pred_N$ may mean prediction samples derived based on the first DIMD mode to the N-th DIMD mode, respectively. $w_1$ to $w_N$ are a weight applied to $pred_1$ to $pred_N$, respectively, and may be determined based on the amplitude of a gradient for pre-calculated N DIMD modes. $Planar_{Hor}$ may mean a prediction sample derived based on a horizontal planar mode, and $w_{(N+1)}$ may be a weight applied to a prediction sample according to a horizontal planar mode. $w_{(N+1)}$ may be determined based on at least one of the gradients for the N DIMD modes. Alternatively, $w_{(N+1)}$ may be determined based on information for deriving a weight according to a horizontal planar mode, and corresponding information may be signaled through a bitstream. Alternatively, $w_{(N+1)}$ may be determined based on a weight pre-defined in an encoding device and a decoding device. Here, as described above, N is an integer of 1, 2, 3 or more.

Alternatively, when a weighted sum with a prediction sample according to a horizontal planar mode is applied to a current block, a weighted sum with a prediction sample according to the N-th DIMD mode may be restricted from being applied even when N DIMD modes are derived for a current block. In this case, the prediction sample of a current block may be derived as in Equation 8 below.

$$[\text{Equation } 8]$$

$$pred = w_1 * pred_1 + w_2 * pred_2 + \cdots + w_{N-1} * pred_{(N-1)} + w_N * Planar_{Hor}$$

Referring to Equation 8, the prediction sample (pred) of a current block may be derived based on a weighted sum between prediction samples ($pred_1$ to $pred_{(N-1)}$) derived based on the first DIMD mode to the (N-1)-th DIMD mode excluding the N-th DIMD mode, respectively, and a prediction sample ($Planar_{Hor}$) derived based on a horizontal planar mode. In other words, when a weighted sum with a prediction sample according to a horizontal planar mode is applied to a current block, a prediction sample according to the N-th DIMD mode may be replaced with a prediction sample according to a horizontal planar mode.

Here, $w_1$ to $w_{N-1}$ are a weight applied to $pred_1$ to $pred_{(N-1)}$, respectively, and may be determined based on the amplitude of a gradient for pre-calculated (N-1) DIMD modes. Similarly, $w_N$ may be determined based on at least one of the gradients for the (N-1) DIMD modes. Alternatively, $w_N$ may be determined based on information for deriving a weight according to a horizontal planar mode, and corresponding information may be signaled through a bitstream. Alternatively, $w_N$ may be determined based on a weight pre-defined in an encoding device and a decoding device.

When the amplitude of a gradient in a top neighboring area is greater than the amplitude of a gradient in a left neighboring area, a current block may be a block that is greatly influenced by the sample of a top neighboring area. In this way, when a current block is determined as a block that is greatly influenced by the sample of a top neighboring area, the predetermined planar mode may be determined as a vertical planar mode. In other words, the prediction sample of a current block may be derived based on a weighted sum between a prediction sample derived based on a DIMD mode and a prediction sample derived based on a vertical planar mode.

As an example, when N DIMD modes are derived for a current block, the prediction sample of a current block may be derived as in Equation 9 below.

[Equation 9]

$$pred = w_1 * pred_1 + w_2 * pred_2 + \cdots + w_{N-1} * pred_{(N-1)} + w_N * pred_N + w_{(N+1)}$$
$$* Planar_{Ver}$$

In Equation 9, pred may mean the prediction sample of a current block. $pred_1$ to $pred_N$ may mean a prediction sample derived based on a first DIMD mode to a N-th DIMD mode, respectively. $w_1$ to $w_N$ are a weight applied to $pred_1$ to $pred_N$, respectively, and may be determined based on the amplitude of a gradient for pre-calculated N DIMD modes. $Planar_{Ver}$ may mean a prediction sample derived based on a vertical planar mode, and $w_{(N+1)}$ may be a weight applied to a prediction sample according to a vertical planar mode. $w_{(N+1)}$ may be determined based on at least one of the gradients for the N DIMD modes. Alternatively, $w_{(N+1)}$ may be determined based on information for deriving a weight according to a horizontal planar mode, and corresponding information may be signaled through a bitstream. Alternatively, $w_{(N+1)}$ may be determined based on a weight pre-defined in an encoding device and a decoding device. Here, as described above, N is an integer of 1, 2, 3 or more.

Alternatively, when a weighted sum with a prediction sample according to a vertical planar mode is applied to a current block, a weighted sum with a prediction sample according to the N-th DIMD mode may be restricted from being applied even when N DIMD modes are derived for a current block. In this case, the prediction sample of a current block may be derived as in Equation 10 below.

[Equation 10]

$$pred = w_1 * pred_1 + w_2 * pred_2 + \cdots + w_{N-1} * pred_{(N-1)} + w_N * Planar_{Ver}$$

Referring to Equation 10, the prediction sample (pred) of a current block may be derived based on a weighted sum between a prediction sample ($pred_1$ to $pred_{(N-1)}$) derived based on a first DIMD mode to the (N-1)-th DIMD mode excluding the N-th DIMD mode, respectively, and a prediction sample ($Planar_{Ver}$) derived based on a vertical planar mode. In other words, when a weighted sum with a prediction sample according to a vertical planar mode is applied to a current block, a prediction sample according to the N-th DIMD mode may be replaced with a prediction sample according to a vertical planar mode.

Here, $w_1$ to $w_{N-1}$ are a weight applied to $pred_1$ to $pred_{(N-1)}$, respectively, and may be determined based on the amplitude of a gradient for pre-calculated (N-1) DIMD modes. Similarly, $w_N$ may be determined based on at least one of the gradients for the (N-1) DIMD modes. Alternatively, $w_N$ may be determined based on information for deriving a weight according to a vertical planar mode, and corresponding information may be signaled through a bitstream. Alternatively, $w_N$ may be determined based on a weight pre-defined in an encoding device and a decoding device.

Embodiment 2

A predetermined planar mode may be determined based on the amplitude of a gradient for the first DIMD mode of a current block. The amplitude of a gradient for a first DIMD mode may be calculated/confirmed for each sub-area within a neighboring area. Here, a sub-area is as described in Embodiment 1. A planar mode may be determined by comparing the amplitude of a gradient for each sub-area.

As an example, the amplitude of a gradient for a first DIMD mode in a left neighboring area, a top neighboring area and a top-left neighboring area is called $Amp_L$, $Amp_A$ and $Amp_{AL}$, respectively. As in Equation 11 below, the type of a planar mode may be determined based on a comparison between amplitudes of the gradient.

[Equation 11]

$$\text{PlanarType} = \begin{cases} Horizontal\ planar\ mode, & if\ AmpL > Th1 * AmpA + Th2 * AmpAL \\ Vertical\ planar\ mode, & if\ AmpA > Th1 * AmpL + Th2 * AmpAL \\ Non-directional\ planar\ mode, & otherwise \end{cases}$$

In Equation 11, weights Th1 and Th2 for a threshold value are a weight for each neighboring area, and may be an arbitrary integer. As an example, Th1 and Th2 may be 2, respectively. Alternatively, Th1 may be 2 and Th2 may be 0. The weight may be a value that is pre-defined equally for an encoding device and a decoding device, and may be signaled at the level of at least one of a VPS, a SPS, a PPS, a picture header (PH) or a slice header (SH) or may be signaled at the level of a block such as a coding tree unit or a coding unit. Alternatively, the weight may be variably determined according to the amplitude or form of a current block.

In addition, a comparison between the amplitude of a gradient for the first DIMD mode and the amplitude of a gradient for the second DIMD mode may be further considered. Here, the amplitude of a gradient for the first DIMD mode and the second DIMD mode may be calculated based on the entire neighboring area rather than a partial sub-area. Alternatively, the amplitude of a gradient for the first DIMD mode and the second DIMD mode may be calculated based on a partial sub-area within a neighboring area (e.g., a left, top or top-left neighboring area).

As an example, as in Equation 12 below, the type of a planar mode may be determined by further considering a comparison between the amplitude of a gradient for the first DIMD mode and the amplitude of a gradient for the second DIMD mode.

[Equation 12]

$$\text{PlanarType}$$

$$= \begin{cases} Horizontal\ planar\ mode, & if\ Amp > Thmode * Amp'\ and\ AmpL > Th1 * AmpA + Th2 * AmpAL \\ Vertical\ planar\ mode, & if\ Amp > Thmode * Amp'\ and\ AmpA > Th1 * AmpL + Th2 * AmpAL \\ Non-directional\ planar\ mode, & otherwise \end{cases}$$

Equation 12 means that a comparison condition between the amplitude (Amp) of a gradient for the first DIMD mode and the amplitude (Amp') of a gradient for the second DIMD mode is added to Equation 11. In other words, when Amp is greater than a value obtained by applying a predetermined weight ($Th_{mode}$) to Amp', any one of a horizontal planar mode or a vertical planar mode is available, and otherwise, the type of a planar mode may be determined as a non-directional planar mode.

When the type of a predetermined planar mode is determined by the above-described method, the prediction sample of a current block may be derived as in Equation 13 below.

[Equation 13]

$$pred = w_1 * pred_1 + w_2 * pred_2 + \cdots + w_{N-1} * pred_{(N-1)} + w_N * pred_N + w_{(N+1)} * pred_{PlanarType}$$

In Equation 13, pred may mean the prediction sample of a current block. $pred_1$ to $pred_N$ may mean a prediction sample derived based on a first DIMD mode to a N-th DIMD mode, respectively. $w_1$ to $w_N$ are a weight applied to $pred_1$ to $pred_N$, respectively, and may be determined based on the amplitude of a gradient for pre-calculated N DIMD modes. $pred_{PlanarType}$ may mean a prediction sample derived based on the type of a planar mode, and $w_{(N+1)}$ may be a weight applied to $pred_{PlanarType}$.

Alternatively, when a weighted sum with a prediction sample according to a predetermined planar mode is applied to a current block, a weighted sum with a prediction sample according to the N-th DIMD mode may be restricted from being applied even when N DIMD modes are derived for a current block. In this case, the prediction sample of a current block may be derived as in Equation 14 below.

[Equation 14]

$$pred = w_1 * pred_1 + w_2 * pred_2 + \cdots + w_{N-1} * pred_{(N-1)} + w_N * pred_{PlanarType}$$

Referring to Equation 14, the prediction sample (pred) of a current block may be derived based on a weighted sum between a prediction sample derived based on a first DIMD mode to the (N-1)-th DIMD mode excluding the N-th DIMD mode, respectively, and a prediction sample derived based on a predetermined planar mode. In other words, when a weighted sum with a prediction sample according to a predetermined planar mode is applied to a current block, a prediction sample according to the N-th DIMD mode may be replaced with a prediction sample according to a predetermined planar mode.

Embodiment 3

When the first DIMD mode of a current block is determined to be the mode of a horizontal component, a predetermined planar mode may be determined as a horizontal planar mode. Alternatively, when the first DIMD mode of a current block is determined to be the mode of a horizontal component, a predetermined planar mode may be determined as a vertical planar mode. In this way, the effect of smoothing a prediction block may be obtained by using a planar mode in the opposite direction to a DIMD mode.

In the present disclosure, the type of a planar mode is determined by considering the first DIMD mode of a current block, but is not limited thereto. As an example, the type of a planar mode may be determined by further considering the second DIMD mode in addition to the first DIMD mode of a current block. Specifically, the amplitude of a gradient between the first DIMD mode and the second DIMD mode may be compared, and a result of that comparison may be further considered to determine the type of a planar mode.

When a predetermined planar mode is determined as a horizontal planar mode, the prediction sample of a current block may be derived as in Equation 15 or 16 below. Alternatively, when a predetermined planar mode is determined as a vertical planar mode, the prediction sample of a current block may be derived as in Equation 17 or 18 to be described below.

[Equation 15]

$$pred = w_1 * pred_1 + w_2 * pred_2 + \cdots + w_{N-1} * pred_{(N-1)} + w_N * pred_N + w_{(N+1)}$$
$$* Planar_{Hor}$$

In Equation 15, pred may mean the prediction sample of a current block. $pred_1$ to $pred_N$ may mean a prediction sample derived based on a first DIMD mode to a N-th DIMD mode, respectively. $w_1$ to $w_N$ are a weight applied to $pred_1$ to $pred_N$, respectively, and may be determined based on the amplitude of a gradient for pre-calculated N DIMD modes. $Planar_{Hor}$ may mean a prediction sample derived based on a horizontal planar mode, and $w_{(N+1)}$ may be a weight applied to a prediction sample according to a horizontal planar mode. A method for determining $w_{(N+1)}$ is as described in Embodiment 2. Here, as described above, N is an integer of 1, 2, 3 or more.

Alternatively, when a weighted sum with a prediction sample according to a horizontal planar mode is applied to a current block, a weighted sum with a prediction sample according to the N-th DIMD mode may be restricted from being applied even when N DIMD modes are derived for a current block. In this case, the prediction sample of a current block may be derived as in Equation 16 below.

[Equation 16]

$$pred = w_1 * pred_1 + w_2 * pred_2 + \cdots + w_{N-1} * pred_{(N-1)} + w_N * Planar_{Hor}$$

Referring to Equation 16, the prediction sample (pred) of a current block may be derived based on a weighted sum between a prediction sample ($pred_1$ to $pred_{(N-1)}$) derived based on a first DIMD mode to the (N-1)-th DIMD mode excluding the N-th DIMD mode, respectively, and a prediction sample ($Planar_{Hor}$) derived based on a horizontal planar mode. In other words, when a weighted sum with a prediction sample according to a horizontal planar mode is applied to a current block, a prediction sample according to the N-th DIMD mode may be replaced with a prediction sample according to a horizontal planar mode. A weight in Equation 16 may be determined according to a method described in Embodiment 2.

When the first DIMD mode of a current block is determined to be the mode of a vertical component, a predetermined planar mode may be determined as a vertical planar mode. Alternatively, when the first DIMD mode of a current block is determined to be the mode of a vertical component, a predetermined planar mode may be determined as a horizontal planar mode. In this way, the effect of smoothing a prediction block may be obtained by using a planar mode in the opposite direction to a DIMD mode.

In the present disclosure, the type of a planar mode is determined by considering the first DIMD mode of a current block, but is not limited thereto. As an example, the type of a planar mode may be determined by further considering a second DIMD mode in addition to the first DIMD mode of a current block. Specifically, the amplitude of a gradient between a first DIMD mode and a second DIMD mode may be compared, and a result of that comparison may be further considered to determine the type of a planar mode.

When a predetermined planar mode is determined as a vertical planar mode, the prediction sample of a current block may be derived as in Equation 17 or 18 below. Alternatively, when a predetermined planar mode is determined as a horizontal planar mode, the prediction sample of a current block may be derived as in Equation 15 or 16 described above.

[Equation 17]

$$pred = w_1 * pred_1 + w_2 * pred_2 + \cdots + w_{N-1} * pred_{(N-1)} + w_N * pred_N + w_{(N+1)} * Planar_{Ver}$$

In Equation 17, pred may mean the prediction sample of a current block. $pred_1$ to $pred_N$ may mean a prediction sample derived based on a first DIMD mode to a N-th DIMD mode, respectively. $w_1$ to $w_N$ are a weight applied to $pred_1$ to $pred_N$, respectively, and may be determined based on the amplitude of a gradient for pre-calculated N DIMD modes. $Planar_{Ver}$ may mean a prediction sample derived based on a vertical planar mode, and $w_{(N+1)}$ may be a weight applied to a prediction sample according to a vertical planar mode. A method for determining $w_{(N+1)}$ is as described in Embodiment 2. Here, as described above, N is an integer of 1, 2, 3 or more.

Alternatively, when a weighted sum with a prediction sample according to a vertical planar mode is applied to a current block, a weighted sum with a prediction sample according to the N-th DIMD mode may be restricted from being applied even when N DIMD modes are derived for a current block. In this case, the prediction sample of a current block may be derived as in Equation 18 below.

[Equation 18]

$$pred = w_1 * pred_1 + w_2 * pred_2 + \cdots + w_{N-1} * pred_{(N-1)} + w_N * Planar_{Ver}$$

Referring to Equation 18, the prediction sample (pred) of a current block may be derived based on a weighted sum between a prediction sample derived based on a first DIMD mode to the (N-1)-th DIMD mode excluding the N-th DIMD mode, respectively, and a prediction sample derived based on a vertical planar mode. In other words, when a weighted sum with a prediction sample according to a vertical planar mode is applied to a current block, a prediction sample according to the N-th DIMD mode may be replaced with a prediction sample according to a vertical planar mode. A weight in Equation 18 may be determined according to a method described in Embodiment 2.

When the first DIMD mode of a current block is not the mode of vertical and horizontal components, a predetermined planar mode may be determined as a non-directional planar mode, and the prediction sample of a current block may be derived as in Equation 19 or 20 below.

[Equation 19]

$$pred = w_1 * pred_1 + w_2 * pred_2 + \cdots + w_{N-1} * pred_{(N-1)} + w_N * pred_N + w_{(N+1)} * Planar$$

In Equation 19, pred may mean the prediction sample of a current block. $pred_1$ to $pred_N$ may mean a prediction sample derived based on a first DIMD mode to a N-th DIMD mode, respectively. $w_1$ to $w_N$ are a weight applied to $pred_1$ to $pred_N$, respectively, and may be determined based on the amplitude of a gradient for pre-calculated N DIMD modes. Planar may mean a prediction sample derived based on a non-directional planar mode, and $w_{(N+1)}$ may be a weight applied to a prediction sample according to a non-directional planar mode. $w_{(N+1)}$ may be determined based on at least one of the gradients for the N DIMD modes. Alternatively, $w_{(N+1)}$ may be determined based on information for deriving a weight according to a non-directional planar mode, and corresponding information may be signaled through a bitstream.

Alternatively, $w_{(N+1)}$ may be determined based on a weight pre-defined in an encoding device and a decoding device. Here, as described above, N is an integer of 1, 2, 3 or more.

Alternatively, when a weighted sum with a prediction sample according to a non-directional planar mode is applied to a current block, a weighted sum with a prediction sample according to the N-th DIMD mode may be restricted from being applied even when N DIMD modes are derived for a current block. In this case, the prediction sample of a current block may be derived as in Equation 20 below.

[Equation 20]

$$pred = w_1 * pred_1 + w_2 * pred_2 + \cdots + w_{N-1} * pred_{(N-1)} + w_N * Planar$$

Referring to Equation 20, the prediction sample (pred) of a current block may be derived based on a weighted sum between a prediction sample ($pred_1$ to $pred_{(N-1)}$) derived based on a first DIMD mode to the (N-1)-th DIMD mode excluding the N-th DIMD mode, respectively, and a prediction sample (Planar) derived based on a non-directional planar mode. In other words, when a weighted sum with a prediction sample according to a non-directional planar mode is applied to a current block, a prediction sample according to the N-th DIMD mode may be replaced with a prediction sample according to a non-directional planar mode.

Here, $w_1$ to $w_{N-1}$ are a weight applied to $pred_1$ to $pred_{(N-1)}$, respectively, and may be determined based on the amplitude of a gradient for pre-calculated (N-1) DIMD modes. Similarly, $w_N$ may be determined based on at least one of the gradients for the (N-1) DIMD modes. Alternatively, $w_N$ may be determined based on information for deriving a weight according to a non-directional planar mode, and corresponding information may be signaled through a bitstream. Alternatively, $w_N$ may be determined based on a weight pre-defined in an encoding device and a decoding device.

Hereinafter, a method for determining whether the first DIMD mode of a current block is the mode of a non-directional component and/or the mode of a vertical or horizontal component will be described.

When a first DIMD mode is a mode having an index smaller than a diagonal mode, a first DIMD mode may be determined as the mode of a horizontal component. When a first DIMD mode is a mode having an index greater than a diagonal mode, a first DIMD mode may be determined as the mode of a vertical component. Here, a diagonal mode may mean a mode referring to a sample in a top-left direction or a mode having a prediction direction from the top-left to the bottom-right.

Alternatively, when the index of a first DIMD mode is greater than or equal to ($mode_{Hor}$ - K) and less than or equal to ($mode_{Hor}$ + K), a first DIMD mode may be determined as the mode of a horizontal component. Here, $mode_{Hor}$ may mean an index in a horizontal mode. When the index of a first DIMD mode is greater than or equal to ($mode_{Ver}$ - K) and less than or equal to ($mode_{Ver}$ + K), a first DIMD mode may be determined as the mode of a vertical component. Here, $mode_{Ver}$ may mean an index in a vertical mode. When a first DIMD mode has any other index, a first DIMD mode may be determined as the mode of a non-directional component. Here, K may be a natural number greater than or equal to 0 and less than or equal to 16. This method may improve the accuracy of prediction by giving a weight to a directional feature configuring the prediction sample of a current block.

Alternatively, let's assume that the first DIMD mode is M1 and the second DIMD mode is M2. According to the index of M1 and M2, a current block may be determined as any one of a horizontal component block, a vertical component block or a non-directional component block.

As an example, when M1 is the mode of a horizontal component and the absolute value of a difference between M1 and M2 is less than a predetermined threshold value, a current block may be determined as a horizontal component block. In this case, a predetermined planar mode may be determined as a horizontal planar mode, and the prediction sample of a current block may be derived as in Equation 15 or 16 described above.

Alternatively, when M1 is the mode of a vertical component and the absolute value of a difference between M1 and M2 is less than a predetermined threshold value, a current block may be determined as a vertical component block. In this case, a predetermined planar mode may be determined as a vertical planar mode, and the prediction sample of a current block may be derived as in Equation 17 or 18 described above.

Alternatively, when M1 is the mode of a horizontal component and the absolute value of a difference between M1 and M2 is greater than or equal to a predetermined threshold value, a current block may be determined as a non-directional component block. When M1 is the mode of a vertical component and the absolute value of a difference between M1 and M2 is greater than or equal to a predetermined threshold value, a current block may be determined as a non-directional component block. When M1 is the mode of a non-directional component, a current block may be determined as a non-directional component block. When a current block is determined as a non-directional component block, a predetermined planar mode may be determined as a non-directional planar mode and the prediction sample of a current block may be derived as in Equation 19 or 20 described above. Here, a predetermined threshold value may be 1 to any one of the indices of a possible mode. For example, a predetermined threshold value may be 5.

This method may improve the accuracy of prediction by more strictly dividing a directional feature configuring the prediction sample of a current block and giving a weight to a directional feature only when all conditions are satisfied.

Alternatively, according to the directional feature of N DIMD modes, a current block may be determined as any one of a horizontal component block, a vertical component block or a non-directional component block.

As an example, when all of a first DIMD mode to the N-th DIMD mode are the mode of a horizontal component, a predetermined planar mode for a current block may be determined as a horizontal planar mode, and the prediction sample of a current block may be derived as in Equation 15 or 16 described above. When all of a first DIMD mode to the N-th DIMD mode are the mode of a vertical component, a predetermined planar mode for a current block may be determined as a vertical planar mode, and the prediction sample of a current block may be derived as in Equation 17 or 18 described above. For other cases (i.e., when any one of a first DIMD mode to the N-th DIMD mode has a different directional feature from the other one), a predetermined planar mode for a current block may be determined as a non-directional planar mode, and the prediction sample of a current block may be derived as in Equation 19 or 20 described above.

Alternatively, based on a difference between the directional component of a first DIMD mode and n DIMD modes among the top N DIMD modes, a current block may be determined as any one of a horizontal component block, a vertical component block or a non-directional component block. Here, n may be an integer greater than or equal to 2 and less than or equal to N.

As an example, when a first DIMD mode is the mode of a horizontal component and the maximum value ($\max(|M_i - M_j|)$, $1 \leq i, j \leq n$)) among the differences between n DIMD modes is less than a predetermined threshold value, a current block may be determined as a horizontal component block. In this case, a predetermined planar mode may be determined as a horizontal planar mode, and the prediction sample of a current block may be derived as in Equation 15 or 16 described above. Alternatively, when the first DIMD mode is the mode of a vertical component and the maximum value ($\max(|M_i - M_j|)$, $1 \leq i, j \leq n$)) among the differences between n DIMD modes is less than a predetermined threshold value, a current block may be determined as a vertical component block. In this case, a predetermined planar mode may be determined as a vertical planar mode, and the prediction sample of a current block may be derived as in Equation 17 or 18 described above. The predetermined threshold value may be 1 to any one of the indices of a possible mode. For example, a predetermined threshold value may be n.

Specifically, when N=5 and n=3, the prediction sample of a current block may be derived through the weighted sum of a prediction sample according to five DIMD modes and a prediction sample according to a predetermined planar mode. The absolute value of a difference between the top three DIMD modes in descending order of the amplitude of a gradient among the five DIMD modes may be calculated. When the top three DIMD modes are M1, M2 and M3, |M1-M2|, |M1-M3| and |M2-M3| may be calculated, respectively. When the maximum value among the three absolute values is less than or equal to 3 and M1 is the mode of a horizontal component, a predetermined planar mode may be determined as a horizontal planar mode, and the prediction sample of a current block may be derived as in Equation 15 or 16 described above.

This method may improve the accuracy of prediction by more strictly dividing a directional feature configuring the prediction sample of a current block and giving a weight to a directional feature only when all conditions are satisfied.

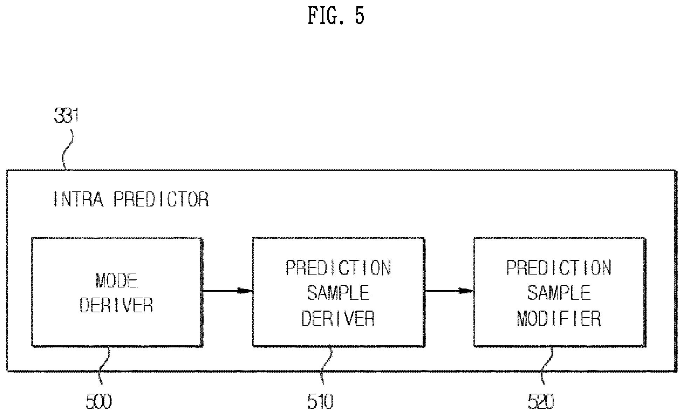

FIG. 5 shows a schematic configuration of an intra predictor 331 performing an intra prediction method according to the present disclosure.

Referring to FIG. 5, an intra predictor 331 may include a mode deriver 500, a prediction sample deriver 510 and a prediction sample modifier 520.

A mode deriver 500 may derive the intra prediction mode of a current block.

The intra prediction mode of a current block may be derived based on decoder-side intra mode derivation (DIMD), which is the same as described by referring to FIG. 4.

A prediction sample deriver 510 may derive the prediction sample of a current block based on the intra prediction mode of a current block.

A prediction sample deriver 510 may derive the prediction sample of a current block by performing intra prediction based on one or more intra prediction modes (i.e., DIMD modes) derived based on DIMD. It is the same as described by referring to FIG. 4.

A prediction sample modifier 520 may modify the prediction sample of a current block based on a predetermined planar mode. A prediction sample modifier 520 may perform a weighted sum between a prediction sample derived based on one or more DIMD modes and a prediction sample derived based on a predetermined planar mode. Here, a predetermined planar mode may be any one of a non-directional planar mode, a horizontal planar mode or a vertical planar mode. A method for determining a predetermined planar mode is the same as described by referring to FIG. 4, and here, a detailed description is omitted.

In addition, a prediction sample modifier 520 may adaptively perform modification of a prediction sample based on at least one of whether the neighboring area of a current block is available or a predetermined flag.

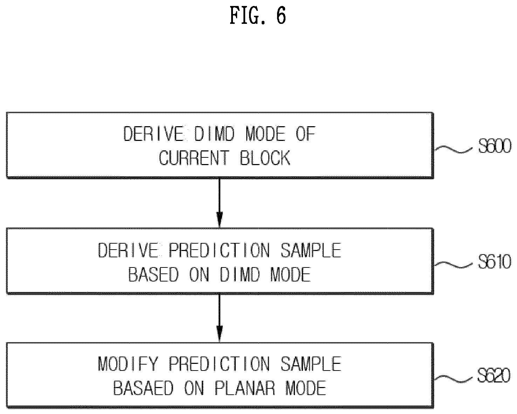

FIG. 6 is an embodiment according to the present disclosure, and shows an intra prediction method performed by an encoding device.

Referring to FIG. 6, the intra prediction mode of a current block may be derived based on decoder-side intra mode derivation (DIMD) S600.

Specifically, a gradient may be calculated based on at least two samples belonging to the neighboring area of a current block. One or more intra prediction modes may be derived based on at least one of a calculated gradient or the amplitude of a gradient. The top N intra prediction modes with the largest amplitude of a gradient may be selected, which may be set as the intra prediction mode of a current block. Here, N may be an integer of 1, 2, 3 or more. It is the same as described by referring to FIG. 4, and here, a detailed description is omitted.

Referring to FIG. 6, the prediction sample of a current block may be derived based on the intra prediction mode of a current block S610.

One or more intra prediction modes may be derived based on DIMD for a current block, and intra prediction may be performed based on a corresponding DIMD mode to derive the prediction sample of a current block.

Referring to FIG. 6, the prediction sample of a current block may be modified based on a predetermined planar mode S620.

A prediction sample derived based on one or more DIMD modes described above may be modified based on a prediction sample according to a predetermined planar mode, and a modified prediction sample may be set as the prediction sample of a current block.

Specifically, the prediction sample of a current block may be derived based on a weighted sum between a prediction sample derived based on one or more DIMD modes described above and a prediction sample derived based on a predetermined planar mode. Here, a predetermined planar mode may be any one of a non-directional planar mode, a horizontal planar mode or a vertical planar mode. A method for determining a predetermined planar mode is the same as described by referring to FIG. 4, and here, a detailed description is omitted.

In addition, modification of the prediction sample may be adaptively performed based on at least one of whether the neighboring area of a current block is available or a predetermined flag. Alternatively, whether modification of the prediction sample is performed may be determined, and modification of a prediction sample may be adaptively performed based on a corresponding determination. In this case, a flag representing whether to modify a prediction sample may be encoded in a bitstream.

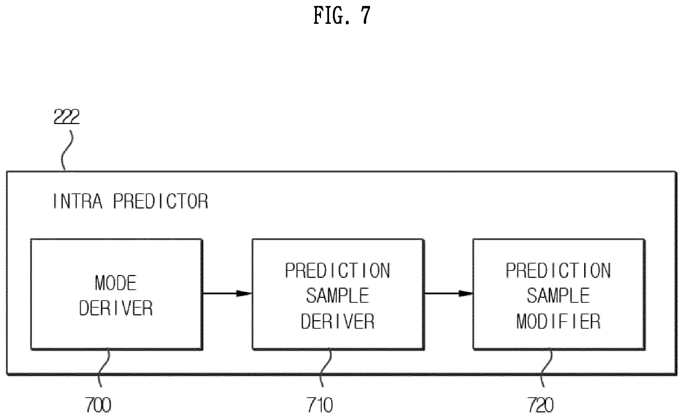

FIG. 7 shows a schematic configuration of an intra predictor 222 performing an intra prediction method according to the present disclosure.

Referring to FIG. 7, an intra predictor 222 may include a mode deriver 700, a prediction sample deriver 710 and a prediction sample modifier 720.

A mode deriver 700 may derive the intra prediction mode of a current block.

The intra prediction mode of a current block may be derived based on decoder-side intra mode derivation (DIMD), which is the same as described by referring to FIG. 4.

A prediction sample deriver 710 may derive the prediction sample of a current block based on the intra prediction mode of a current block.

A prediction sample deriver 710 may derive the prediction sample of a current block by performing intra prediction based on one or more intra prediction modes (i.e., DIMD modes) derived based on DIMD. It is the same as described by referring to FIG. 4.

A prediction sample modifier 720 may modify the prediction sample of a current block based on a predetermined planar mode. A prediction sample modifier 520 may perform a weighted sum between a prediction sample derived based on one or more DIMD modes and a prediction sample derived based on a predetermined planar mode. ]Here, a predetermined planar mode may be any one of a non-directional planar mode, a horizontal planar mode or a vertical planar mode. A method for determining a predetermined planar mode is the same as described by referring to FIG. 4, and here, a detailed description is omitted.

In addition, a prediction sample modifier 520 may adaptively perform modification of a prediction sample based on at least one of whether the neighboring area of a current block is available or a predetermined flag. In addition, a prediction sample modifier 520 may determine whether to modify the prediction sample of a current block and adaptively perform modification of a prediction sample based on a corresponding determination. In this case, an entropy encoder 240 may encode a flag representing whether to modify the prediction sample of a current block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

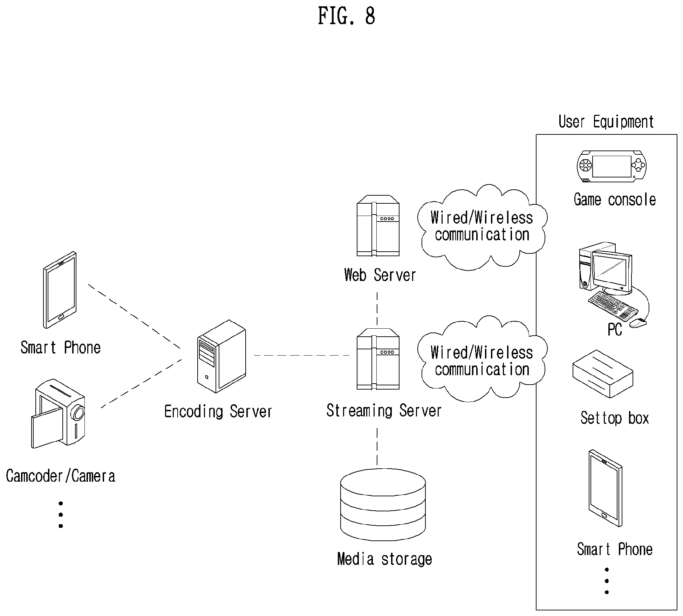

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

   deriving an intra prediction mode of a current block, wherein the intra prediction mode includes a first decoder-side intra mode derivation (DIMD) mode derived by DIMD, and the DIMD is a method of deriving one or more intra prediction modes based on a gradient between samples belonging to a neighboring area of the current block;
   deriving a first prediction sample of the current block based on the intra prediction mode;
   deriving a second prediction sample of the current block based on a predetermined planar mode, wherein the predetermined planar mode is any one of a non-directional planar mode, a horizontal planar mode, or a vertical planar mode; and
   deriving a prediction sample of the current block based on a weighted sum between the first prediction sample and the second prediction sample.

2. The method of Claim 1, wherein the neighboring area includes a plurality of sub-areas, and
   wherein the plurality of sub-areas includes at least two of a left neighboring area, a top neighboring area, or a top-left neighboring area.

3. The method of Claim 2, wherein an amplitude of a gradient for the intra prediction mode is calculated for the plurality of sub-areas, respectively.

4. The method of Claim 3, wherein the predetermined planar mode is determined based on a position of a sub-area to which an amplitude of a largest gradient among amplitudes of gradients for the plurality of sub-areas belongs.

5. The method of Claim 3, wherein the predetermined planar mode is determined based on a comparison between any one of amplitudes of gradients for the plurality of sub-areas and another one of the amplitudes of the gradients for the plurality of sub-areas.

6. The method of Claim 5, wherein the predetermined planar mode is determined based on a comparison between an amplitude of a gradient for the DIMD mode and an amplitude of a gradient for a second DIMD mode derived based on the DIMD.

7. The method of Claim 1, wherein the predetermined planar mode is determined based on a directionality of the first DIMD mode.

8. The method of Claim 7, wherein the predetermined planar mode is determined based on a difference between the first DIMD mode and a second DIMD mode derived based on the DIMD.

9. The method of Claim 7, wherein pre-defined intra prediction modes are divided into a plurality of groups, and
   wherein the directionality of the first DIMD mode is determined based on a group to which the first DIMD mode among the plurality of groups belongs.

10. An image encoding method, comprising:

    deriving an intra prediction mode of a current block, wherein the intra prediction mode includes a first decoder-side intra mode derivation (DIMD) mode derived by DIMD, and the DIMD is a method of deriving one or more intra prediction modes based on a gradient between samples belonging to a neighboring area of the current block;
    deriving a first prediction sample of the current block based on the intra prediction mode;
    deriving a second prediction sample of the current block based on a predetermined planar mode, wherein the predetermined planar mode is any one of a non-directional planar mode, a horizontal planar mode, or a vertical planar mode; and

deriving a prediction sample of the current block based on a weighted sum between the first prediction sample and the second prediction sample.

11. A method for transmitting data for image information, comprising:

obtaining a bitstream for the image information, wherein the bitstream is generated by deriving an intra prediction mode of a current block, deriving a first prediction sample of the current block based on the intra prediction mode, deriving a second prediction sample of the current block based on a predetermined planar mode, deriving a prediction sample of the current block based on a weighted sum between the first prediction sample and the second prediction sample, and encoding the current block based on the prediction sample; and
transmitting data including the bitstream,
wherein the intra prediction mode includes a first decoder-side intra mode derivation (DIMD) mode derived by DIMD, and the DIMD is a method of deriving one or more intra prediction modes based on a gradient between samples belonging to a neighboring area of the current block, and
wherein the predetermined planar mode is any one of a non-directional planar mode, a horizontal planar mode, or a vertical planar mode.

FIG.1

FIG.2

ENCODING APPARATUS

INPUT IMAGE (PICTURE)

IMAGE PARTITIONER

INTER PREDICTOR

INTRA PREDICTOR

DPB

MEMORY

FILTER

TRANSFORMER

QUANTIZER

ENTROPY ENCODER

BITSTREAM

DEQUANTIZER

INVERSE TRANSFORMER

200

210

220

221

222

230

231

232

233

234

235

240

250

260

270

## FIG.3

EP 4 622 266 A1

FIG.4

```
┌─────────────────────────────────┐
│      DERIVE DIMD MODE OF         │
│        CURRENT BLOCK             │──── S400
└─────────────────────────────────┘
                 │
                 ▼
┌─────────────────────────────────┐
│     DERIVE PREDICTION SAMPLE     │
│       BASED ON DIMD MODE         │──── S410
└─────────────────────────────────┘
                 │
                 ▼
┌─────────────────────────────────┐
│     MODIFY PREDICTION SAMPLE     │
│      BASAED ON PLANAR MODE       │──── S420
└─────────────────────────────────┘
```

FIG. 5

331

INTRA PREDICTOR

| MODE DERIVER | PREDICTION SAMPLE DERIVER | PREDICTION SAMPLE MODIFIER |

500       510       520

FIG. 6

```
┌─────────────────────────────────────┐
│      DERIVE DIMD MODE OF            │
│       CURRENT BLOCK                 │────  S600
└─────────────────────────────────────┘
                  │
                  ▼
┌─────────────────────────────────────┐
│      DERIVE PREDICTION SAMPLE       │
│       BASED ON DIMD MODE            │────  S610
└─────────────────────────────────────┘
                  │
                  ▼
┌─────────────────────────────────────┐
│      MODIFY PREDICTION SAMPLE       │
│       BASAED ON PLANAR MODE         │────  S620
└─────────────────────────────────────┘
```

FIG. 7

222

INTRA PREDICTOR

| MODE DERIVER | PREDICTION SAMPLE DERIVER | PREDICTION SAMPLE MODIFIER |
|---|---|---|

700          710          720

FIG. 8

Smart Phone

Camcoder/Camera

Encoding Server

Web Server

Streaming Server

Wired/Wireless communication

Wired/Wireless communication

Media storage

User Equipment

Game console

PC

Settop box

Smart Phone

## INTERNATIONAL SEARCH REPORT

| International application No. |
|---|
| **PCT/KR2023/018594** |

**A. CLASSIFICATION OF SUBJECT MATTER**

**H04N 19/593**(2014.01)i; **H04N 19/11**(2014.01)i; **H04N 19/176**(2014.01)i; **H04N 19/70**(2014.01)i; **H04N 19/132**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 19/105(2014.01); H04N 19/11(2014.01); H04N 19/176(2014.01); H04N 19/51(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), DIMD(decoder-side intra mode derivation), 기울기(gradient), 플래너(planar), 가중(weight)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-214028 A1 (BEIJING BYTEDANCE NETWORK TECHNOLOGY CO., LTD. et al.) 13 October 2022 (2022-10-13)<br>See paragraphs [0049]-[0050] and [0084]; claims 1 and 38; and figures 1 and 21-22. | 1-11 |
| Y | YOO, Sunmi et al. EE2-related : On directional planar prediction. JVET-AB0104-v1, Joint Video Experts Team (JVET) of ITU-T SG 16 WP 3 and ISO/IEC JTC 1/SC 29, 28th Meeting. Mainz, DE. pp. 1-3, 14 October 2022.<br>See pages 1-2. | 1-11 |
| Y | KR 10-2022-0046007 A (LG ELECTRONICS INC.) 13 April 2022 (2022-04-13)<br>See paragraphs [0127] and [0143]-[0148]. | 8 |
| A | KR 10-2021-0134407 A (TENCENT AMERICA LLC) 09 November 2021 (2021-11-09)<br>See paragraph [0067]; and figure 6d. | 1-11 |
| A | KR 10-2022-0016938 A (INDUSTRY ACADEMY COOPERATION FOUNDATION OF SEJONG UNIVERSITY) 10 February 2022 (2022-02-10)<br>See paragraphs [0101]-[0103]; and figure 9. | 1-11 |

☐ Further documents are listed in the continuation of Box C.     ☑ See patent family annex.

| | | |
|---|---|---|
| \* | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **23 February 2024** | **23 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/018594**

| Patent document cited in search report | | | Publication date (day/month/year) | Patent family member(s) | | | Publication date (day/month/year) |
|---|---|---|---|---|---|---|---|
| WO | 2022-214028 | A1 | 13 October 2022 | None | | | |
| KR | 10-2022-0046007 | A | 13 April 2022 | CN | 117294862 | A | 26 December 2023 |
| | | | | EP | 3691264 | A1 | 05 August 2020 |
| | | | | EP | 3691264 | B1 | 08 March 2023 |
| | | | | JP | 2023-011804 | A | 24 January 2023 |
| | | | | JP | 7171875 | B2 | 15 November 2022 |
| | | | | KR | 10-2023-0084604 | A | 13 June 2023 |
| | | | | KR | 10-2540190 | B1 | 08 June 2023 |
| | | | | US | 11695925 | B2 | 04 July 2023 |
| | | | | US | 2023-0291893 | A1 | 14 September 2023 |
| | | | | WO | 2020-071873 | A1 | 09 April 2020 |
| KR | 10-2021-0134407 | A | 09 November 2021 | CN | 113767633 | A | 07 December 2021 |
| | | | | EP | 3925221 | A1 | 22 December 2021 |
| | | | | EP | 3925221 | A4 | 17 August 2022 |
| | | | | JP | 2023-126577 | A | 07 September 2023 |
| | | | | JP | 7317994 | B2 | 31 July 2023 |
| | | | | US | 11595666 | B2 | 28 February 2023 |
| | | | | US | 2023-0171412 | A1 | 01 June 2023 |
| | | | | WO | 2021-158615 | A1 | 12 August 2021 |
| KR | 10-2022-0016938 | A | 10 February 2022 | CN | 109845254 | A | 04 June 2019 |
| | | | | EP | 3528497 | A1 | 21 August 2019 |
| | | | | JP | 2022-020630 | A | 01 February 2022 |
| | | | | KR | 10-2023-0025851 | A | 23 February 2023 |
| | | | | KR | 10-2357283 | B1 | 28 January 2022 |
| | | | | US | 11039148 | B2 | 15 June 2021 |
| | | | | US | 2023-0101636 | A1 | 30 March 2023 |
| | | | | WO | 2018-070790 | A1 | 19 April 2018 |

Form PCT/ISA/210 (patent family annex) (July 2022)